# EUROPEAN PATENT APPLICATION

(11) **EP 4 776 179 A1**
(43) Date of publication of application: **15.07.2026**
(21) Application number: 26150928.5
(22) Date of filing: 09.01.2026
(51) Int. Cl.: G06K 15/12, B41J 2/47, G03G 15/043, G02B 26/12

(54) **OPTICAL SCANNING DEVICE AND IMAGE FORMING APPARATUS INCLUDING THE SAME**

(30) Priority: 14.01.2025 JP 2025004506
(71) Applicant: KYOCERA Document Solutions Inc., Osaka-shi, Osaka 540-8585 (JP)
(72) Inventor: Mizutani, Hideji, Osaka, 540-8585 (JP); Yoshida, Shingo, Osaka, 540-8585 (JP); Mori, Hayato, Osaka, 540-8585 (JP)
(74) Representative: BRP Renaud & Partner mbB Rechtsanwälte Patentanwälte Steuerberater

(57) **Abstract**

An optical scanning device includes a polygon mirror, a mirror cover, and a position sensing portion. The polygon mirror rotates about a rotation axis extending along the top-bottom direction to reflect laser light and scans the circumferential surface of an image carrying member along a main scanning direction. The mirror cover covers the polygon mirror. The position sensing portion senses the rotation position of the polygon mirror. The mirror cover has an opening part. The opening part penetrates, along the radial direction, part of a circumferential wall part covering the polygon mirror from radially outward. The position sensing portion is disposed on the mirror cover with at least part of it disposed in the opening part.

## Description

### BACKGROUND

The present disclosure relates to an optical scanning device and an image forming apparatus including the same.

Conventional optical scanning devices include a polygon mirror and a position sensing portion. The polygon mirror rotates about a rotation axis extending along the top-bottom direction to reflect laser light and thereby scans the circumferential surface of an image carrying member in a main scanning direction. The position sensing portion senses the rotation position of the polygon mirror.

Inconveniently, in the conventional optical scanning device with the above configuration, air current produced as the polygon mirror rotates at high speed may collide with the position sensing portion, causing noise.

In view of the above inconveniences, an object of the present disclosure is to provide an optical scanning device that can achieve improved quietness and an image forming apparatus including the same.

### SUMMARY

To attain the above object, a first configuration of the present disclosure includes a polygon mirror, a mirror cover, and a position sensing portion. The polygon mirror rotates about a rotation axis extending along the top-bottom direction to reflect laser light and scans the circumferential surface of an image carrying member in a main scanning direction. The mirror cover covers the polygon mirror. The position sensing portion senses the rotation position of the polygon mirror. The mirror cover has an opening part. The opening part penetrates, along the radial direction, part of a circumferential wall part covering the polygon mirror from radially outward. The position sensing portion is disposed on the mirror cover with at least part of it disposed in the opening part.

With the first configuration according to the present disclosure, it is possible to provide an optical scanning device that can achieve improved quietness and to provide an image forming apparatus including the same.

### BRIEF DESCRIPTION OF THE DRAWINGS

Fig. 1 is a schematic sectional view of the internal construction of an image forming apparatus 100 according to one embodiment of the present disclosure.
Fig. 2 is a top view of an optical scanning device 5 according to the embodiment of the present disclosure.
Fig. 3 is a side sectional view of the internal configuration of the optical scanning device 5 according to the embodiment of the present disclosure.
Fig. 4 is an enlarged perspective view around a polygon mirror 45 in the optical scanning device 5 according to the present disclosure.
Fig. 5 is an enlarged perspective view of the polygon mirror 45 in the optical scanning device 5 according to the present disclosure.
Fig. 6 is an enlarged vertical sectional view around the polygon mirror 45 in the optical scanning device 5 according to the present disclosure.
Fig. 7 is an enlarged horizontal sectional view around the polygon mirror 45 in the optical scanning device 5 according to the present disclosure.
Fig. 8 is a perspective view of a position sensing portion 70 in the optical scanning device 5 according to the present disclosure.

### DETAILED DESCRIPTION

### [1. Configuration of Image Forming Apparatus 100]

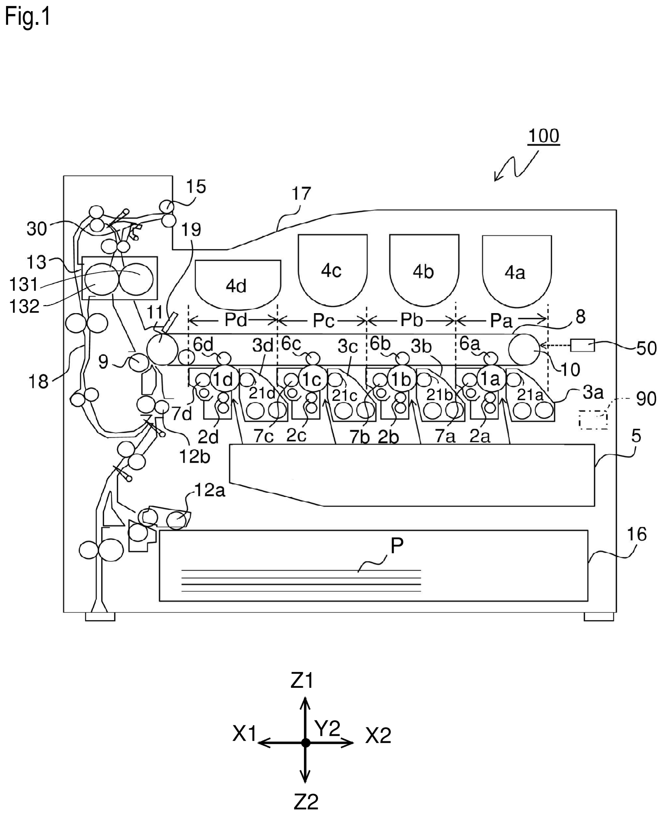

An embodiment of the present disclosure will be described below with reference to the accompanying drawings. Fig. 1 is a schematic sectional view of the overall configuration of an image forming apparatus 100 that incorporates an optical scanning device 5 according to the present disclosure. For convenience, the vertical direction with the image forming apparatus 100 installed in a usable state (i.e., the state shown in Fig. 1) is defined as the top-bottom direction (direction Z1-Z2). In addition, with the face of the image forming apparatus 100 at the near side of the plane in Fig. 1 defined as its front face (frontage), the front-rear direction (direction Y1-Y2) is defined. In addition, with the front face of the image forming apparatus 100 in the installed state taken as a reference, the left-right direction (direction X1-X2) is defined. In the embodiment, the left-right direction (direction X1-X2) is orthogonal to the top-bottom direction (direction Z1-Z2) and to the front-rear direction (direction Y1-Y2).

The image forming apparatus 100 is a tandem-type color printer and includes image forming portions Pa, Pb, Pc, and Pd, an optical scanning device 5, photosensitive drums (image carrying members) 1a to 1d, charging devices 2a to 2d, developing devices 3a to 3d, primary transfer rollers 6a to 6d, a secondary transfer roller 9, a sheet cassette 16, a fixing device 13, an image density sensor 50, and a control portion 90.

The four image forming portions Pa, Pb, Pc, and Pd are arranged in the body of the image forming apparatus 100 in this order from upstream (right side in Fig. 1) in the conveyance direction. The image forming portions Pa to Pd are provided so as to correspond to images of four different colors (yellow, magenta, cyan, and black) and sequentially form a yellow, a magenta, a cyan, and a black image, respectively, each through the processes of electrostatic charging, exposure to light, image development, and image transfer.

Used as the photosensitive drums 1a to 1d is an organic photosensitive member (OPC photosensitive member) having an organic photosensitive layer formed on it, an amorphous silicon photosensitive member having an amorphous silicon photosensitive layer formed on it, or the like. The photosensitive drums 1a to 1d are arranged in tandem so as to correspond to the different colors, namely yellow, magenta, cyan, and black.

Around the photosensitive drum (image carrying member) 1a, the developing device 3a, the charging device 2a, and a cleaning device 7a are arranged. Similarly, around the photosensitive drums 1b to 1d, the developing devices 3b to 3d, the charging devices 2b to 2d, and the cleaning devices 7b to 7d are arranged, respectively. The optical scanning device 5 is arranged below the developing devices 3a to 3d.

The developing devices 3a to 3d are disposed opposite the photosensitive drums (image carrying members) 1a to 1d and include development rollers (developer carrying members) 21a to 21d. The developing devices 3a to 3d apply a predetermined development voltage to the development rollers (developer carrying members) 21a to 21d to attach toner to electrostatic latent images formed on the photosensitive drums (image carrying members) 1a to 1d to form toner images. The developing devices 3a to 3d face the photosensitive drums 1a to 1d, respectively, and feed toner to the photosensitive drums 1a to 1d. The developing devices 3a to 3d include containers 4a to 4d that store toners of different colors, namely magenta, cyan, yellow, and black, respectively.

The charging devices 2a to 2d are disposed upstream of the developing devices 3a to 3d with respect to the rotation direction of the photosensitive drums 1a to 1d and face the surfaces of the photosensitive drums 1a to 1d, respectively. The charging devices 2a to 2d electrostatically charge uniformly the surfaces of the photosensitive drums 1a to 1d, respectively.

The cleaning devices 7a to 7d remove developer (toner) and the like left on the photosensitive drums 1a to 1d.

In the embodiment, the optical scanning device 5 is disposed below the photosensitive drums 1a to 1d. Based on image data of, for example, letters or patterns fed to an image input portion from a personal computer or the like, the optical scanning device 5 shines light to (scans with light) the surfaces of the photosensitive drums 1a to 1d electrostatically charged uniformly by the charging devices 2a to 2d. This forms electrostatic latent images on the surfaces of the photosensitive drums 1a to 1d.

An intermediate transfer belt (belt) 8 is provided adjacent to the image forming portions Pa to Pd. The toner images formed on the photosensitive drums 1a to 1d are primarily transferred sequentially to the intermediate transfer belt 8 moving while in contact with the photosensitive drums 1a to 1d so as to be overlayed on each other.

The toner images primarily transferred to the intermediate transfer belt 8 are secondarily transferred to a sheet P (recording medium) as one example of a recording medium by the secondary transfer roller 9. The sheet P having the toner image secondarily transferred to it then has the toner image fixed in the fixing device 13 to be discharged out of the body of the image forming apparatus 100.

The sheet P to which the toner images are secondarily transferred is stored in the sheet cassette 16 disposed in a lower part of the body of the image forming apparatus 100 and is conveyed via a sheet feed roller 12a and a pair of registration rollers 12b to a nip portion between the secondary transfer roller 9 and a drive roller 11 for the intermediate transfer belt 8. A belt cleaner 19 in a blade form is disposed downstream of the secondary transfer roller 9 to remove toner and the like left on the surface of the intermediate transfer belt 8.

When image data is input from a host device such as a personal computer, first, the charging devices 2a to 2d electrostatically charge the surfaces of the photosensitive drums 1a to 1d uniformly. Then, the optical scanning device 5 shines light based on the image data to form electrostatic latent images according to the image data on the photosensitive drums 1a to 1d. The developing devices 3a to 3d are loaded with predetermined amounts of two-component developer containing toner of the different colors, namely yellow, magenta, cyan, and black, respectively. Note that, when as toner images are formed as will be described later the proportion of toner in two-component developer loaded in the developing devices 3a to 3d falls below a prescribed value, toner is supplied from the containers 4a to 4d to the developing devices 3a to 3d. The toner in the developer is fed to the photosensitive drums 1a to 1d by the developing devices 3a to 3d and electrostatically attaches to them. This forms toner images corresponding to the electrostatic latent images formed by exposure to light from the optical scanning device 5.

Then the primary transfer rollers 6a to 6d produce electric fields with a predetermined transfer voltage between the primary transfer rollers 6a to 6d and the photosensitive drums 1a to 1d so as to primarily transfer the yellow, magenta, cyan, and black toner images on the photosensitive drums 1a to 1d to the intermediate transfer belt 8. These images of four colors are formed in a predetermined positional relationship determined in advance so as to form a predetermined full-color image. Then, in preparation for the subsequent formation of new electrostatic latent images, the toner and the like left on the surfaces of the photosensitive drums 1a to 1d after primary transfer are removed by the cleaning devices 7a to 7d.

The intermediate transfer belt 8 is wound around a driven roller 10, upstream, and a drive roller 11, downstream. As the drive roller 11 is rotated by a belt drive motor (not shown), the intermediate transfer belt 8 starts to rotate clockwise. Then, the sheet P is conveyed with predetermined timing from the pair of registration rollers 12b to the nip portion (secondary transfer nip portion) between the drive roller 11 and the secondary transfer roller 9 provided adjacent to it, and the full-color image on the intermediate transfer belt 8 is secondarily transferred to the sheet P. The sheet P with the toner image secondarily transferred to it is conveyed to the fixing device 13.

The image density sensor 50 faces the driven roller 10 across the intermediate transfer belt 8. The image density sensor 50 is, for example, a mirror reflection sensor that senses reflected light. The image density sensor 50 converts a measurement result into an electrical signal to output it to the control portion 90, which will be described later. Note that the image density sensor 50 needs only be a sensor that can sense density information on the toner image; it can be, for example, a sensor that recognizes density from an image taken of the toner image.

The sheet P conveyed to the fixing device 13 is heated and pressed by a fixing belt 131 and a pressing roller 132 to fix the toner image to the surface of the sheet P, thereby forming the predetermined full-color image. The sheet P having the full-color image formed on it has its conveyance direction switched by a branching portion 30 branching into a plurality of directions to be discharged as it is (or after being conveyed to a reversing conveyance passage 18 and having images formed on both sides) to a discharge tray 17 by a pair of discharging rollers 15.

The control portion 90 comprehensively controls the image forming apparatus 100. Specifically, the control portion 90 controls the image forming portion. The image forming portion includes the optical scanning device 5, the photosensitive drums (image carrying members) 1a to 1d, the charging devices 2a to 2d, and the developing devices 3a to 3d.

### [2. Configuration of Optical Scanning Device]

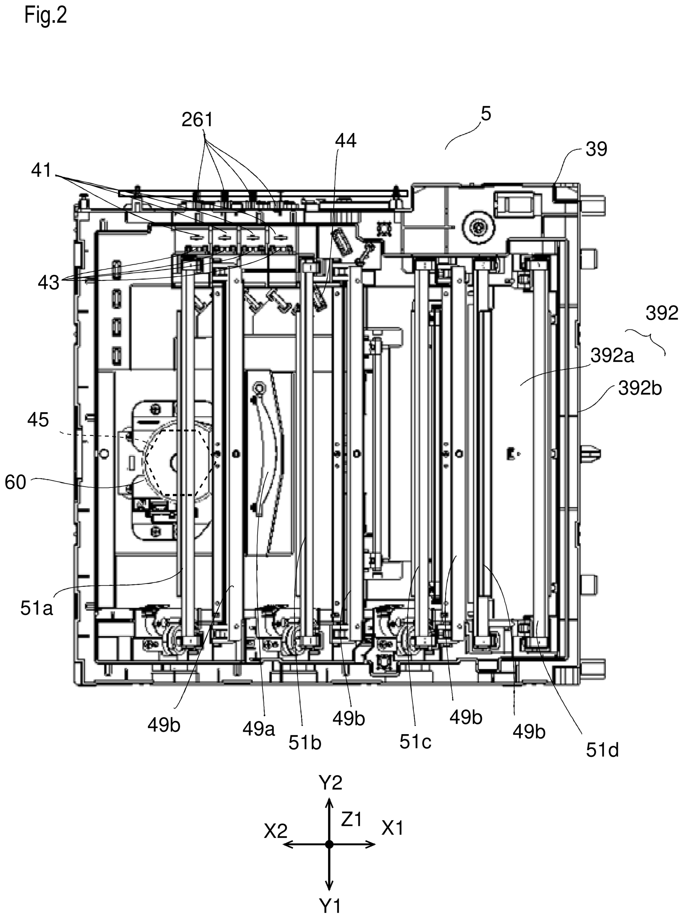

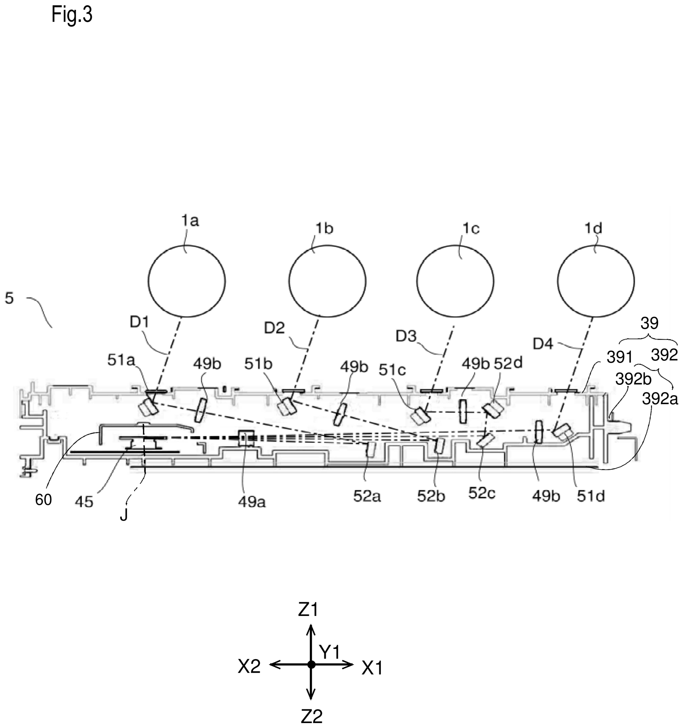

Fig. 2 is a top view of the optical scanning device 5, showing a state with a lid portion 391 removed. Fig. 3 is a side sectional view of the internal configuration of the optical scanning device 5. Note that part of Fig. 3 only schematically illustrates the structures of individual members, and does not necessarily illustrate their shapes and positional relationships precisely.

Note that, in the following description, a main scanning direction (direction Y1-Y2) is the longitudinal direction of reflection mirrors 52a to 52d; the main scanning direction (direction Y1-Y2) coincides with the direction along which the rotation axes of the photosensitive drums 1a to 1d extend and the front-rear direction of the image forming apparatus 100. A subsidiary scanning direction (direction Z1-Z2) is a direction parallel to the rotation axis J of the polygon mirror 45 and coincides with the top-bottom direction of the image forming apparatus 100. The left-right direction (direction X1-X2) is a direction orthogonal to the main scanning direction (direction Y1-Y2) and to the subsidiary scanning direction (direction Z1-Z2) and coincides with the direction along which the reflection mirrors 52a to 52d are arrayed.

The optical scanning device 5 outputs (shines) a plurality of (in the embodiment, four) laser beams D1 to D4 modulated based on image signals to the photosensitive drums 1a to 1d to expose the surfaces of the photosensitive drums 1a to 1d to those beams, respectively, to form electrostatic latent images through attenuation of electric charge.

The optical scanning device 5 includes a housing 39, a laser diode 261, a collimator lens 41, a cylindrical lens (not shown), a first aperture 43 and a second aperture 44, a polygon mirror 45, a plurality of scanning lenses 49a and 49b, output mirrors 51a to 51d, and reflection mirrors 52a to 52d.

The housing 39 has a lid portion 391 and a containing portion 392. The lid portion 391 covers the open top face of the containing portion 392. The containing portion 392 is formed substantially in a quadrilateral shape as seen from above. The containing portion 392 houses the collimator lens 41, the cylindrical lens (not shown), the first and second apertures 43 and 44, the polygon mirror 45, the plurality of scanning lenses 49a and 49b, the output mirrors 51a to 51d, and the reflection mirrors 52a to 52d.

The containing portion 392 has a bottom wall part 392a and a side wall part 392b. The bottom wall part 392a stretches in a direction crossing the rotation axis J of the polygon mirror. In the embodiment, the bottom wall part 392a stretches in a direction orthogonal to the rotation axis J of the polygon mirror 45. The side wall part 392b protrudes upward Z1 from a peripheral part of the bottom wall part 392a such that a top end part of it reaches the lid portion 391. The side wall part 392b surrounds from radially outside the collimator lens 41, the cylindrical lens (not shown), the first and second apertures 43 and 44, the polygon mirror 45, the plurality of scanning lenses 49a and 49b, the output mirrors 51a to 51d, and the reflection mirrors 52a to 52d.

In the embodiment, four laser diodes 261 and four collimator lenses 41 are provided so as to correspond to the image forming portions Pa to Pd, respectively. The laser diodes 261 emit the laser beams D1 to D4 corresponding to the image forming portions Pa to Pd, respectively (see Fig. 3). The collimator lens 41 collimates the laser beam D1 to D4 emitted from the laser diode 261 to make it into a parallel light beam (collimated beam).

The polygon mirror 45 reflects the plurality of laser beams D1 to D4 respectively emitted from the laser diodes 261 to scan the scanned surfaces of the photosensitive drums (image carrying members) 1a to 1d corresponding to the laser diodes 261, respectively. This allows the single polygon mirror 45 to scan the plurality of photosensitive drums 1a to 1d and helps reduce the number of components and hence the manufacturing cost of the optical scanning device 5. Note that the polygon mirror 45 is covered by a mirror cover 60 (see Fig. 3). This helps prevent contamination of the mirror face of the polygon mirror 45 with fine particles, leading to a drop in its reflectance. The polygon mirror 45 and the mirror cover 60 will be described in detail later.

The cylindrical lens (not shown) has a predetermined refractive power over the laser beams D1 to D4 only in the subsidiary scanning direction and converges the laser beams D1 to D4.

The first and second apertures 43 and 44 are disposed between the collimator lens 41 and the cylindrical lens (not shown). The first and second apertures 43 and 44 restrict the optical path width of the laser beams D1 to D4 having passed through the collimator lens 41 to enter the cylindrical lens. In the embodiment, four first apertures 43 are provided so as to correspond to the laser diodes 261, respectively. On the other hand, one second aperture 44 is provided so as to be shared among the laser diodes 261. This helps reduce the number of components of the second aperture 44 and hence the manufacturing cost of the optical scanning device 5.

The scanning lenses 49a and 49b are lenses with fθ characteristics. One scanning lens 49a is provided so as to be shared among the photosensitive drums 1a to 1d. Four scanning lenses 49b are provided so as to correspond to the photosensitive drums 1a to 1d, respectively (see Figs. 2 and 3). The scanning lenses 49a and 49b are disposed between the photosensitive drums 1a to 1d and the polygon mirror 45 and image the laser beams D1 to D4 reflected by the polygon mirror 45 on the scanned surfaces of the corresponding photosensitive drums (image carrying members) 1a to 1d.

The laser beams D1 to D4 are deflected for scanning in the main scanning direction (direction Y1-Y2) by the polygon mirror 45. The laser beams D1 to D4 deflected by the polygon mirror 45 are directed, via optical elements such as the scanning lenses 49a and 49b and the reflection mirrors 52a to 52d, to the output mirrors 51a to 51d, respectively. The laser beams D1 to D4 reflected by the output mirrors 51a to 51d are shone on the photosensitive drums 1a to 1d in image forming portions Pa to Pd, respectively.

### [3. Configuration of Polygon Mirror 45]

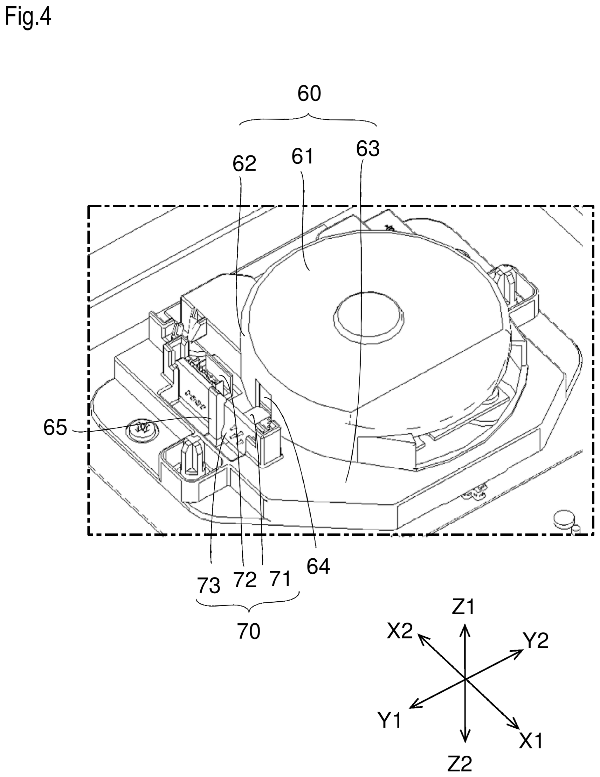

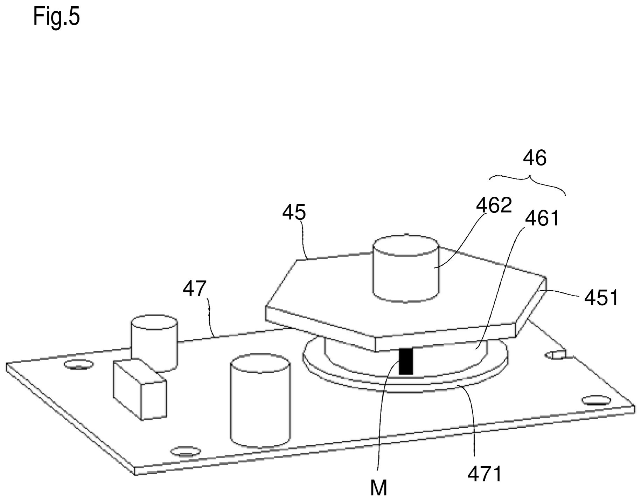

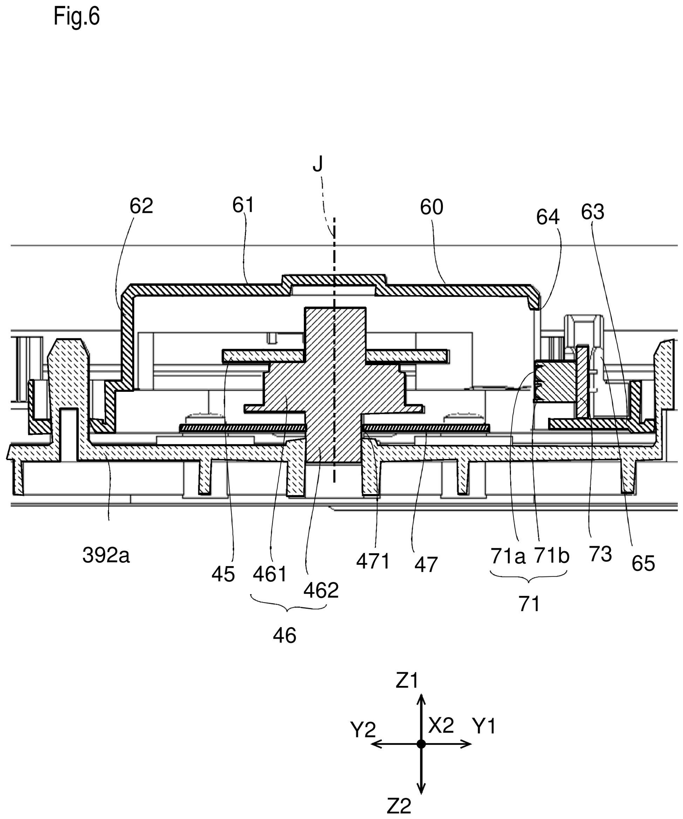

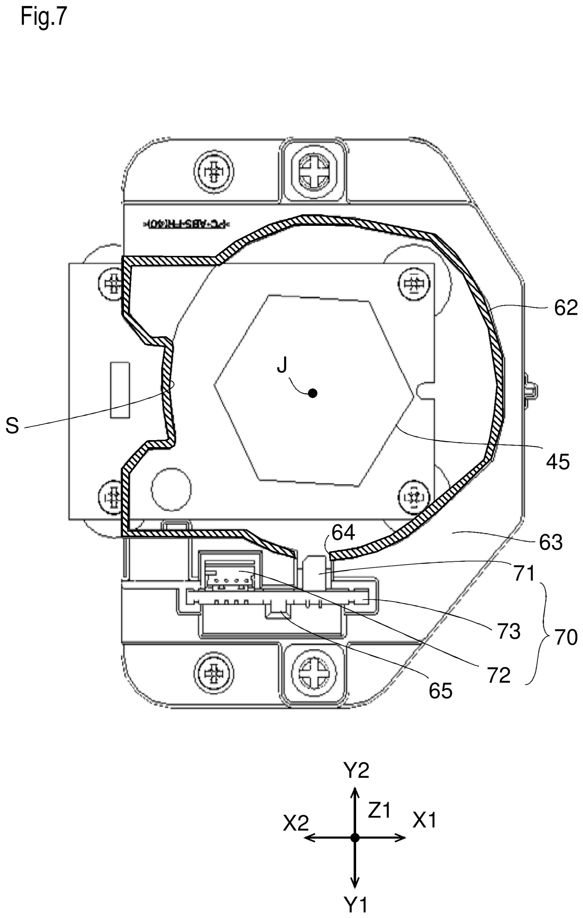

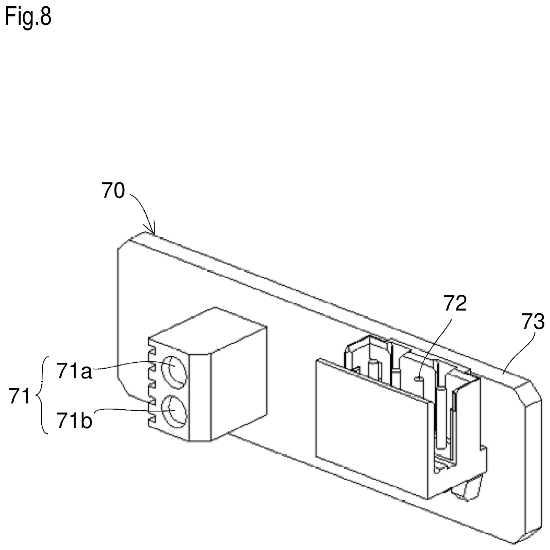

Fig. 4 is an enlarged perspective view around the polygon mirror 45, and Fig. 5 is a perspective view of the polygon mirror 45. Fig. 6 is an enlarged vertical sectional view around the polygon mirror 45, and Fig. 7 is an enlarged horizontal sectional view around the polygon mirror 45. Fig. 8 is a perspective view of a position sensing portion 70.

The optical scanning device 5 further includes a drive motor 46, a substrate 47, a mirror cover 60, and a position sensing portion 70. The substrate 47 has a through hole 471 and is fixed to the bottom wall part 392a. The drive motor 46 has a rotor portion 461 and a shaft 462. The shaft 462 has an upper end part protruding upward Z1 from the rotor portion 461 and a lower end part rotatably inserted in the through hole 471. When the drive motor 46 is fed with a drive current, its shaft 462 rotates about the rotation axis J.

In the embodiment, the polygon mirror 45 is a multifaceted mirror that has six deflecting faces 451 formed along six sides, respectively, of a hexagon. In the polygon mirror 45, the deflecting faces 451 are irradiated with the laser beams D1 to D4 emitted from the laser diodes 261. The polygon mirror 45 is fitted to an upper end part of the shaft 462 and rotates together with the shaft 462 and the rotor portion 461. The polygon mirror 45, while rotating, deflects light rays shone on the deflecting faces 451 and scans the scanned surfaces of the photosensitive drums (image carrying members) 1a to 1d.

The mirror cover 60 covers the polygon mirror 45 and has a top wall part 61, a circumferential wall part 62, and a flange part 63. The mirror cover 60 suppresses noise accompanying the rotation of the polygon mirror 45 and prevents contamination of the polygon mirror 45 with dust and the like.

The top wall part 61 covers the polygon mirror 45 from axially above Z1 and is in a disc shape. In the embodiment, the top wall part 61 stretches in a direction orthogonal to the rotation axis J.

The circumferential wall part 62 extends axially downward Z2 from a circumferential part of the top wall part 61 and is formed in a ring shape as seen from the axial direction. The circumferential wall part 62 covers the polygon mirror 45 from radially outward. The circumferential wall part 62 has an opening part 64. The opening part 64 is formed so as to penetrate part of the circumferential wall part 62 along the radial direction. In the embodiment, the opening part 64 is open at its lower end. The opening part 64 faces the rotor portion 461 and the polygon mirror 45 along the radial direction.

The inner circumferential surface of the circumferential wall part 62 is formed with a plurality of faces that have different distances from the rotation axis J along the radial direction and that are arrayed along the circumferential direction (see Fig. 7). This further suppresses noise accompanying the rotation of the polygon mirror 45. In addition, in a narrowed region S where the circumferential wall part 62 and the polygon mirror 45 are closest to each other along the radial direction, the air current that passes along the circumferential direction along the inner circumferential surface of the circumferential wall part 62 is fastest. In the embodiment, the opening part 64 is located away from the narrowed region S along the circumferential direction. This prevents the air current that passes along the circumferential direction along the inner circumferential surface of the circumferential wall part 62 from colliding with an optical sensor 71 disposed at the opening part 64 to produce noise.

The circumferential wall part 62 also has a light aperture part (not shown) different from the opening part 64. The laser beams D1 to D4 emitted from the laser diodes 261 enter the mirror cover 60 via the light aperture part. On the other hand, the laser beams D1 to D4 deflected by the deflecting faces 451 of the polygon mirror 45 exit out of the mirror cover 60 via the light aperture part.

The flange part 63 stretches radially outward from a lower end part of the circumferential wall part 62 and is screwed to the bottom wall part 392a. This fixes the mirror cover 60 to the containing portion 392.

The position sensing portion 70 senses the rotation position of the polygon mirror 45, and is disposed on the mirror cover 60 with at least part of it disposed in the opening part 64. Disposing the position sensing portion 70 in the opening part 64 blocks part of the opening part 64 with the position sensing portion 70 to further prevent air current running into the mirror cover 60 via the opening part 64. Thus, it is possible to further suppress noise. Disposing the position sensing portion 70 in the opening part 64 also permits the position sensing portion 70 to be disposed closer to the polygon mirror 45. This improves the accuracy of position sensing by the position sensing portion 70. Disposing the position sensing portion 70 on the mirror cover 60 permits the position sensing portion 70 to be fitted together with the mirror cover 60, and this eases their fitting.

Here, at least part of the position sensing portion 70 being disposed in the opening part 64 should be understood to cover arrangements like there: in a section orthogonal to the axial direction (Z1-Z2), the inner end of the position sensing portion 70 along the radial direction is located on the outer circumferential surface of the opening part 64; the inner end of the position sensing portion 70 along the radial direction is located radially inward of the outer circumferential surface of the opening part 64; the inner end of the position sensing portion 70 along the radial direction is on the inner circumferential surface of the opening part 64; and the inner end of the position sensing portion 70 along the radial direction is located radially inward of the inner circumferential surface of the opening part 64.

Preferably, the inner end of the optical sensor 71 along the radial direction is located in the opening part 64, between the inner and outer circumferential surfaces of the circumferential wall part 62. This suppresses, when the air current that passes along the circumferential direction along the inner circumferential surface of the mirror cover 60 passes through the opening part 64, disturbance of the air current and further suppresses noise. Note that, preferably, to further suppress noise, the light emission face of the optical sensor 71 is flush with the inner circumferential surface of the circumferential wall part 62.

More specifically, the position sensing portion 70 is configured to include an optical sensor 71 having a light emission portion 71a and a light reception portion 71b, a circuit board 73, and an input/output terminal 72. Part of the optical sensor 71 is disposed in the opening part 64, and the circuit board 73 and the input/output terminal 72 are disposed radially outward of the circumferential wall part 62. The light emission portion 71a and the light reception portion 71b are arrayed along the axial direction (Z1-Z2), and, in the embodiment, the light emission portion 71a is disposed axially above Z1 the light reception portion 71b.

Arraying the light emission portion 71a and the light reception portion 71b along the axial direction (Z1-Z2) allows the opening part 64 to be formed with a smaller width along the circumferential direction. This further suppresses an air current running into the mirror cover 60 via the opening part 64. Thus, it is possible to further suppress noise and to further improve dust-proofness.

The light emission portion 71a emits light to the rotating rotor portion 461, and the light reception portion 71b receives the reflected light. Note that the circumferential surface of the rotor portion 461 is marked with a marking M at one place at least (see Fig. 5). The optical sensor 71 senses the marking M to sense the rotation position of the polygon mirror 45.

Sensing the rotation position of the polygon mirror 45 makes it possible to set for each face a period from the detection of synchronization to the start of image writing. This helps suppress an error in the scanning position due to production errors among the deflecting faces 451 of the polygon mirror 45.

On the circuit board 73, the optical sensor 71 is mounted and, on the same face, the input/output terminal 72 is disposed that is connected to the optical sensor 71. The input/output terminal 72 is electrically connected to a control system that controls image formation operation in the image forming apparatus 100. The circuit board 73 is disposed upright on the flange part 63. This helps downsize the position sensing portion 70 and also the flange part 63 along the radial direction.

The circuit board 73 is supported by a protruding part 65 on the face of the circuit board 73 opposite from the face on which the optical sensor 71 is mounted. The protruding part 65 protrudes upward Z1 from the top face of the flange part 63, and an upper end part of the protruding part 65 bends toward the polygon mirror 45 to lock an upper end part of the circuit board 73. This eases the fixing of the circuit board 73 to the flange part 63 and thus eases the assembly of the position sensing portion 70.

The present disclosure is not limited to the embodiment described above, and thus any modification can be made without departing from the spirit of the present disclosure. For example, while, in the embodiment, the laser diodes 261 are provided at four places so as to correspond to the image forming portions Pa to Pd, in a monochrome image forming apparatus 100, a laser diode 261 can be provided at one place. Note that the arrangement of the color of the laser beams D1 to D4 is not particularly limited.

The present disclosure finds applications in optical scanning devices that form a latent image on a scanned face by irradiating and scanning it with light.

## Claims

1. An optical scanning device (5) comprising:
a polygon mirror (45) that rotates about a rotation axis (J) extending along a top-bottom direction to reflect laser light, the polygon mirror scanning a circumferential surface of an image carrying member (1a, 1b, 1c, 1d) along a main scanning direction;
a mirror cover (60) that covers the polygon mirror; and
a position sensing portion (70) that senses a rotation position of the polygon mirror,
wherein
the mirror cover has an opening part (64) that penetrates, along a radial direction, part of a circumferential wall part (62) covering the polygon mirror from radially outward, and
the position sensing portion is disposed on the mirror cover with at least part of the position sensing portion disposed in the opening part.

2. The optical scanning device according to claim 1, wherein
the position sensing portion comprises an optical sensor (71) having a light emission portion (71a) and a light receiving portion (71b) arrayed along an axial direction.

3. The optical scanning device according to claim 2, wherein
an inner end of the optical sensor along the radial direction is located in the opening part, between an inner circumferential surface and an outer circumferential surface of the circumferential wall part.

4. The optical scanning device according to claim 1 or 2, wherein
the circumferential wall part is formed in a ring shape as seen from the axial direction, and
the opening part is located away along the circumferential direction from a position where the circumferential wall part and the polygon mirror are closest to each other along the radial direction.

5. The optical scanning device according to claim 2, wherein
the mirror cover has a flange part (63) that stretches radially outward from a lower end part of the circumferential wall part,
the position sensing portion further includes a circuit board (73) on which the optical sensor is mounted, and
the circuit board is disposed upright on the flange part.

6. The optical scanning device according to claim 5, wherein
the position sensing portion further includes:
an input/output terminal (72) disposed on the circuit board, the input/output terminal being connected to the optical sensor,
the input/output terminal is disposed on a same face as the optical sensor,
the flange part has:
a protruding part (65) that protrudes upward from a top face of the flange part, the protruding part supporting the circuit board on a face thereof opposite from a mounting face thereof, and
an upper end part of the protruding part bends toward the polygon mirror to lock an upper end part of the circuit board.

7. An image forming apparatus (100) comprising:
the optical scanning device according to claim 1 or 2;
the image carrying member having a photosensitive layer formed on a surface thereof; and
a charging device (2a, 2b, 2c, 2d) that electrostatically charges the image carrying member to a predetermined surface potential,
the optical scanning device shining light to a surface of the image carrying member electrostatically charged by the charging device to form an electrostatic latent image through attenuation of electric charge.
